# EUROPEAN PATENT SPECIFICATION

(11) **EP 2 164 675 B1**
(45) Date of publication and mention of the grant of the patent: **30.07.2014**
(21) Application number: 08774459.5
(22) Date of filing: 27.06.2008
(51) Int. Cl.: B23K 37/047

(54) **A WELDING DEVICE AND RELATED PROCESS**
SCHWEISSGERÄT UND VERWANDTE VERFAHREN
DISPOSITIF DE SOUDURE ET PROCÉDÉ ASSOCIÉ

(30) Priority: 29.06.2007 IT MI20071307
(43) Date of publication of application: 24.03.2010
(73) Proprietor: Danieli & C. Officine Meccaniche SpA, 33042 Buttrio (Udine) (IT)
(72) Inventor: BAZZARO, Gianluca, I-33033 Codroipo (IT); POLONI, Alfredo, I-34070 Fogliano Redipuglia (IT)
(74) Representative: Cinquantini, Bruno
(86) International application number: PCT/EP2008/058297
(87) International publication number: WO 2009/003950

(56) References cited:
- US-A- 3 091 685
- US-A- 4 294 394
- US-A- 4 892 993

## Description

### Field of the invention

The present invention refers to a device for the end-to-end welding of products of a continuous casting of metallic materials, and to the related welding process, particularly suitable for use in continuous casting plants for the welding of bars, billets, blooms and like products.

### State of the art

The continuous casting technique is used to produce metal products of substantially elongated shape with sections of the type mentioned above. The length of these products when they emerge from the continuous casting process may vary and it is sometimes necessary to join several such elements together by means of an end-to-end welding in order to continuously feed the rolling mill downstream.

The state of the art includes known welding methods and devices that involve welding the tail end of a cast element, already being fed forward to the rolling mill, with the leading end of another element emerging from the casting device or coming from a storing and/or preheating area. Such welding methods and devices are designed to save time and speed up the production chain, which is an extremely important issue for the purpose of achieving a higher productivity of casting and rolling lines. The known welding devices comprise seizing jaws that define a quite extensive surface of contact with the cast product. In the known welding devices, the seizing jaws normally demand wide surfaces of contact with the bars in order to be able to withstand the considerable forces that come to bear on this stage of the casting and rolling process. The jaws must close around the ends of the bars to weld and exert a strong pressure on the bars to keep them sufficiently in contact during the welding process, as well as to compensate for defects in the shape of the bars, the terminal surfaces of which being often not entirely regular, or the bars being twisted lengthwise. When closed around the bars, the jaws are consequently subject to severe loads that they can only withstand if they are suitably sized. Moreover, the larger the jaws, the better they are able to compensate for surface irregularities on the cast product. On the other hand, the larger the dimensions of the jaws, the greater the heat loss from the cast product, which can no longer be retrieved by means of the residual sensible heat of the bar itself.

Moreover, the jaw shoes remain in contact with the surface of the bars, or other previously-mentioned cast products, for a relatively long time in order to complete the welding operation. The contact between the jaw shoes, having a lower temperature than the temperature of the bars, and the surface of the bars, which are at substantially higher temperatures, produces local cooling effects over considerable areas of the bar surface, which may also extend to some depth inside the bar too, giving rise to what are commonly called "black spots". The depth of said spots can reach as much as 10-15% of the thickness of the metal product.

These black spots give rise to numerous metallurgical and industrial plant-related problems.

From the metallurgical and mechanical point of view there are the following drawbacks:
- a markedly uneven microstructure due to the high non-uniformity of the temperature of the bars in the proximity of the welding area;
- a non-uniformity of the temperature between the lower and upper edges of the bars in the proximity of the welding area;
- consequent non-uniformity in the mechanical properties of the final product. From the point of view of the industrial plant, the are the following drawbacks:
- a violent overload, with peaks of more than 60% of the rated torque, on all the rolling stands, and particularly on the first ones, when the welded stretch of bar is rolled;
- consequent difficulties in managing the entire rolling mill;
- an anomalous increase in the wear on the rolling cylinders.

When the cast products are made of conventional carbon steel, in the area of the black spots there is a lower temperature and consequently a higher mechanical resistance than the remainder of the cast product where the temperature is instead higher. As the bars pass between the rolling cylinders, every transition from a hotter and mechanically more malleable area to a cooler, less malleable area, such as the area provided with the black spots, induces violent impacts on the rolling cylinders that, with time, cause early wear on the cylinders. The presence of said areas with black spots also make it necessary to include additional processing operations in order to correct the residual defects.

Instead, if the bars are made of special steel alloys, any difference in temperature between different areas of the same bar can give rise to unwanted thermomechanical changes in metallurgical structure of the bar.

Moreover, the working temperature of the seizing jaws cannot be increased to alleviate the problem of the black spots, because the jaws are generally made of highly-conductive metal alloys, such as Cu, Cu-Be, Cu-Be-Ni, Cu-Be-Fe, Cu-W-Ni, Cu-W-Fe, etc., so they cannot work at excessively high temperatures because this would cause a rapid deterioration in their mechanical features. The jaws consequently need to be provided with forced cooling systems to avoid the risk of their mechanical failure.

Disadvantageously this forced cooling is provided without interruption throughout the entire welding cycle, causing a constant high difference in temperature between the jaw shoes and the bars, which further aggravates the problem of the black spots, and a high consumption of cooling water.

Hence the perceived need to realise a welding device and a related welding process capable of overcoming the above-mentioned drawbacks. A welding device having the features of the preamble of claim 1 is disclosed in US4294394.

### Summary of the invention

The main object of the present invention is to realise a welding device, particularly used for welding continuously-cast products, that enables a considerable reduction in the formation of black spots on the welded product and in their consequent drawbacks, by providing for a minimum area of contact between the jaw shoes and the surfaces of the product.

Another object of the present invention is to provide a related welding process that allows to considerably reduce the consumption of cooling water and to obtain a more limited but effective temperature difference between the cast product to weld and the jaws.

The present invention, therefore, proposes to achieve the above-mentioned objects by realising a welding device for the end-to-end welding of elongated elements with a quadrangular cross-section, such as bars, billets or blooms, produced by a continuous casting process, in the course of a forward feeding along a production line, according to claim 1. Such a device is capable of accompanying the elongated members coming directly from a continuous casting plant or from a preheating oven, during welding along a stretch of a roller table upstream from the rolling mill and comprises:
- first clamping means for seizing a first elongated element defining a forward feed direction and suitable for advancing along said line at a first speed;
- second clamping means for clamping respectively a second elongated element suitable for advancing along said line, in succession with the first element;
- electrical power supply means for supplying an electrical current to the first and second elongated elements to be end-to-end welded,
   wherein the second clamping means are suitable for advancing at a second speed, that is greater than said first speed, in that there are provided cooling means for cooling first and second clamping means,
   wherein each of said first and second seizing means comprises two opposite seizing elements forming a cavity with a shape corresponding to the quadrangular cross-section of the elongated elements, when they are seized, and provided with clamping shoes,
   and wherein the seizing elements define surfaces of contact shoe-elongated element having a longitudinal extension B lower than or equal to 0,67 L, where L is the length of a side of the quadrangular cross-section of the elongated elements, and the length of the stretches of the side of said quadrangular cross-section, excluded from the contact with the shoes, is respectively A ≤ 0,33L and C = L - B - A.

According to another aspect of the invention there is provided a welding process for the end-to-end welding of elongated elements having a quadrangular cross-section, such as bars, billets or blooms, produced by a continuous casting process by means of the welding device of claim 1, according to claim 10. Such a method comprises the following stages:
a) forward feeding of a first elongated element in a rolling mill at a first speed along a predetermined forward feed direction,
b) forward feeding of a second elongated element along said forward feed direction at a second speed, that is higher than that of the first element,
c) putting in reciprocal contact respective facing ends of said elongated elements and locking said elongated elements by means of respective seizing means provided with the clamping shoes, arranged in a first working position, so as to form an integral unit, that accompanies the elongated members during welding along a stretch of a roller table,
d) end to end welding said elongated elements to form a single elongated element by approaching electrical power supply means to lateral surfaces of said elongated elements,
e) detaching said electrical power supply means from said single elongated element,
f) detaching said seizing means from said single elongated element into a second working position,
wherein, throughout the duration of stage (d), there is provided a cooling of the area of the clamping shoes in contact with said elongated elements.

Advantageously, the combination of a limited size of the shoes, a centring of the same shoes with respect to each side of the product to be welded, e.g. a billet, a smaller surface of contact between shoe and billet, and the use of cooling water only during the "flashing" stage enables the following advantages to be achieved:
- a lesser extension of the black spots generated by the contact of the "cold" shoes with the hot surface of the billet;
- a more uniform temperature along each side of the billet;
- less thermal stress and a consequently longer life for the shoes;
- a faster tempering-equalisation of the black spots because they are smaller, thus reducing the absorption peaks in the first stands of the rolling mill when the welded area passes through them;
- improved mechanical and metallurgical features in the welded part of the product.

Additional advantages obtained by the welding device and the welding process of the invention are:
- a high productivity and reliability;
- a limited cost;
- a reduction about processing the product before it reaches the rolling mill;
- an easy insertion of said welding device, without any substantial adaptations, in the existing production lines;
- a significant reduction in the contact time of the electrical power supply units with the surface of the cast product to be welded.

Advantageously, the reduction in the dimensions of the black spots can enable them to be completely reabsorbed by means of the residual heat of the cast product. This helps a longer working life of the rolling mills, with less need for maintenance, or lower duration and frequency of the maintenance operations. The reduction in the dimensions of the black spots also allows to avoid additional processing actions to correct the defects persisting on the welded product.

A further advantage of the device of the invention lies in that it converts a process that was originally discontinuous into a continuous process, enabling a drastic reduction in the quantity of material scrapped and a consequent improvement in the efficiency of the entire process.

The dependent claims describe preferred embodiments of the invention.

### Brief description of the figures

Additional characteristics and advantages of the invention will become more evident in the light of the following detailed description of preferred, but not exclusive embodiments of a welding device, explained here as non-limiting examples with the aid of the attached drawings, wherein:
Fig. 1 schematically shows a side view of a stretch of the casting and rolling line, in which a welding device according to the invention is installed;
Fig. 2 shows a front view of a first method for coupling the device to the product to be welded;
Fig. 3 shows a front view of a second method for coupling the device to the product to be welded;
Fig. 4 shows a diagram of the sizes of a shoe in relation to the product to be welded.

### Detailed description of preferred embodiments of the invention

With reference to the above-mentioned figures, a welding device according to the invention, globally indicated by the numeral 1, inserted between a continuous casting plant and a rolling mill, comprises transport means for transporting the cast products, e.g. a roller conveyor, as schematically illustrated by the rollers 2', 2". Said conveyor may, for instance, comprise a roller table and a self-moving trolley, in which there are housed the welding means comprising seizing jaws and the electrical power supply units, said trolley accompanying the product to be welded along a stretch of the roller table itself.

The elements conveyed may be bars 3', 3", billets or other products of similar shape, such as blooms. In the following description, reference is made to bars, but the term is used also to mean billets or blooms.

These bars emerge directly from a continuous casting plant, or from a pre-heating oven, both of known type and not shown in the drawings, and they advance in the direction of the arrows 4', 4". The bar 3" is initially made to advance at a speed higher than that of the bar 3' that precedes it, until the two facing ends 9, 10 of the bars come into mutual contact. Then they solidarily move forward at the same speed.

The bar 3' generally consists of one or more bars previously joined together by means of end-to-end welding performed at relatively high temperatures, higher than 1000°C, and it is carried by the roller conveyor to a rolling mill of known type, not shown in the figures. The bar 3' may also be of considerable length following the connection of several bars together. The bars 3" needed to obtain an end-product of predetermined length are welded in succession to the bar 3'.

The welding device 1 comprises two jaws 5, 6, each comprising at least two seizing elements 5', 5" and 6', 6"; the first jaw 5 is designed to seize and hold the bar 3", coming from the continuous casting plant, from an oven or from a store. The second jaw 6 is designed to seize and hold the bar 3' already engaged in the rolling mill.

The welding device also comprises pairs of electrical power supply units 7', 7" and 8', 8" for supplying an electrical current to the bars 3', 3" in order to weld them end to end.

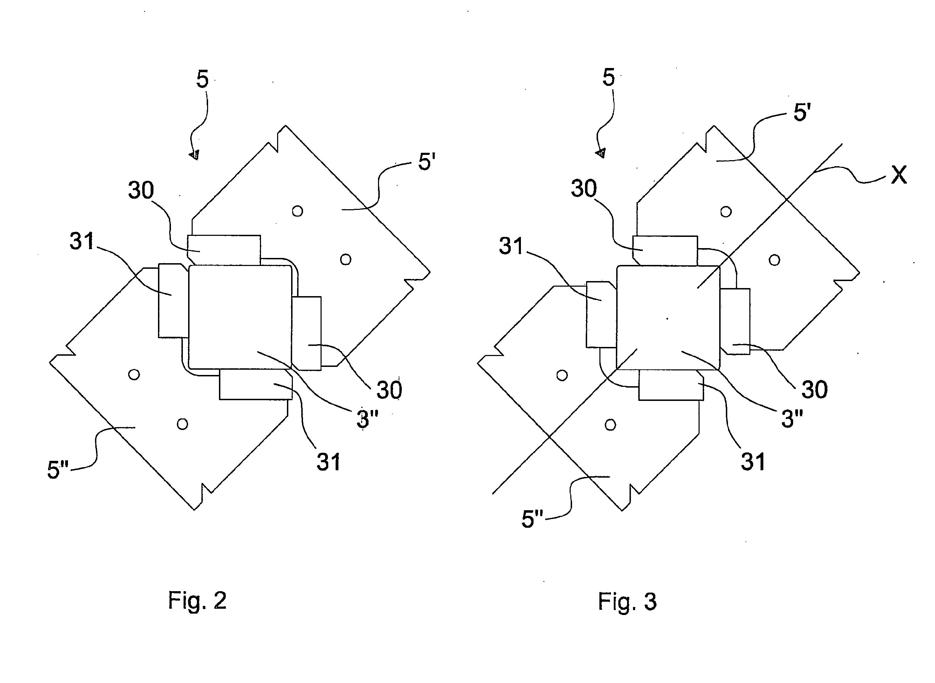

An advantageous embodiment of the welding device of the invention comprises jaws provided with shoes, preferably made of copper or other suitable material, for seizing bars to be welded with a quadrangular cross-section, having the configuration shown in Fig. 2 or 3.

These figures show a cross-sectional view of the jaw 5 in the stage in which it is seizing the bar 3". Each seizing element 5', 5" of the jaw 5 is provided with a pair of shoes, respectively 30 and 31, housed in recesses provided in correspondence with the pointed ends of said seizing elements. This arrangement is identical to that of the jaw 6 in the stage in which it is seizing the bar 3'.

The welding device of the invention comprises a supporting structure for supporting the jaws and suitable for tilting so as to support the jaws in the welding position.

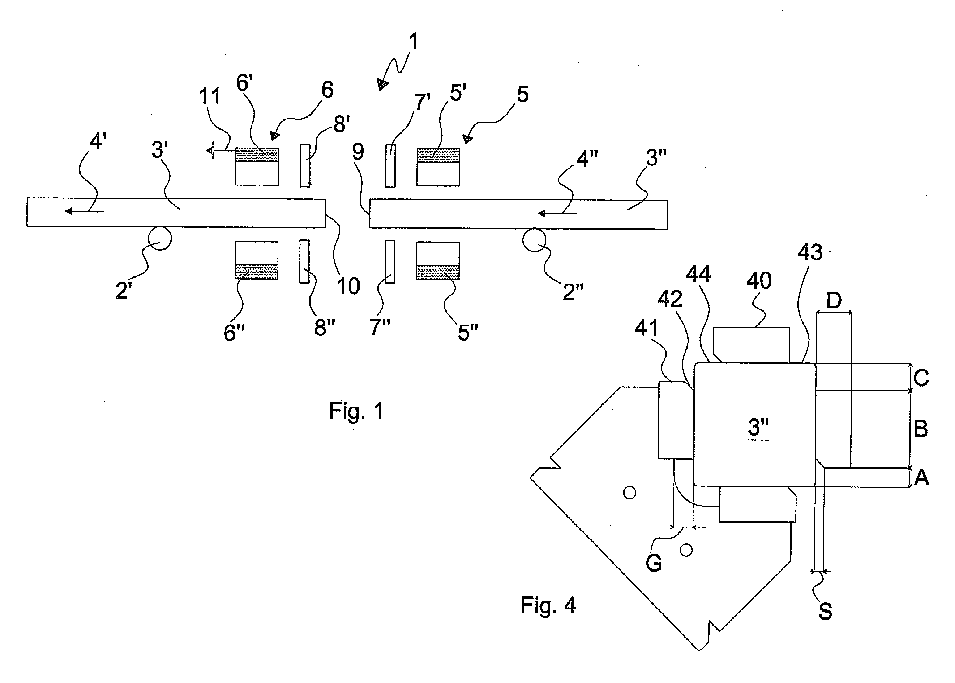

Advantageously, being L the length of one side of a bar or billet, it has been demonstrated that the optimal size of the jaw shoe, having a substantially parallelepiped shape, provides that, with reference to the partial cross-sectional view of Fig. 4:
- the length B of the side 40 of the profile of the shoe, or width of the shoe, defining the extent of the surface of contact between shoe and bar, shall be lower than or equal to 0,67L;
- the length D of the side 41 of the profile of the shoe, or height of the shoe, shall be lower than or equal to 0,35L;
- the height S of the beveling 42 of the shoe in the proximity of the surface of contact shall be lower than or equal to 0,07L.

The lengths A and C of the stretches 43 and 44 of the side L of the quadrangular cross-section of the bar, said stretches being excluded from the contact with the shoe 30, are obtained using the formulas A ≤ 0,33L and C = L - B - A, respectively. It has been demonstrated that varying the dimensions of the jaw shoe with respect to the length of the sides of the bar, in the light of the above considerations, gives rise to a considerable reduction in the extent of the black spots.

In a first embodiment shown in Fig. 3, during the seizing stage, the shoes 30 and 31 are centred in relation to the sides of the quadrangular cross-section of the bar 3" and, if the bar has a square cross-section, they are placed symmetrically with respect to the longitudinal axis X defined by the jaw 5. This centring of the shoes 30, 31 in relation to the sides of the bar advantageously determines a more uniform temperature over the side of the bar. The size of the shoes is, moreover, smaller so that the relative impression on the bar is smaller. The "cold" zone, i.e. the black spot, consequently penetrates less in depth and the tempering occurs more quickly.

In this first embodiment, the optimal sizing of the jaw shoe provides that the lengths A and C of the stretches 43 and 44 of the side L of the quadrangular cross-section of the bar, said stretches not being into contact with the shoe 30, are the same in this case and equal to A = C = (L - B)/2.

In a second embodiment shown in Fig. 2, on the other hand, the shoes 30 and 31 are not centred in relation to the sides of the quadrangular cross-section of the bar 3", but they are arranged two by two in the proximity of two opposite edges of the bar. This arrangement consequently gives rise to a difference in temperature between the upper and lower edges of the bar.

Advantageously, once seizing has been executed, the distance G between the jaws and the bar is sufficient to reduce the heat losses due to irradiation. Said distance G is advantageously higher than or equal to 0,05L, preferably higher than or equal to 0,12L in the case of the embodiment shown in Fig. 3.

In the device of the invention, the seizing jaws 5, 6 are made of steel or a nickel or cobalt alloy.

Below is a description of the welding process that takes place between the outlet from the casting line and the inlet to the rolling mill.

The stage illustrated in figure 1 refers in particular to the operation for approaching the bar 3" to the bar 3' of indefinite length.

The jaws 5, 6 and the electrical power supply units 7', 7" and 8', 8" for welding the bars are placed on a trolley or equivalent movable supporting element, not shown in the figures, that moves in the direction of the arrow 11 along a stretch upstream from the rolling mill. The welding operation thus takes place simultaneously with the forward feeding of the bars, with a consequent time saving.

In a second stage of the welding process the bars 3', 3" are arranged into a position of mutual contact in correspondence with the surfaces 9, 10 and the seizing elements 5', 5", 6', 6" are approached each other during their movement towards the bars. The two bars 3', 3" thus form an integral unit that is held in place by the seizing jaws.

Then comes the welding or "flashing" stage in which the electrical power supply units are applied to the respective bars while the seizing elements 5', 5" and 6', 6" forcibly press the bars 3" and 3' respectively one against the other to optimise the contact between the surfaces of their ends 9 and 10. For a few seconds, a current passes in the electrical power supply units for welding the two bars 3', 3" together end to end.

During the next stage, the electrical power supply units are detached from the new bar, now converted into a single piece due to the connection of the previous bars 3' and 3". The jaws 5, 6 are kept clamped on the new bar to enable suitable shearing or trimming tools to be used to remove any excess material from the area of the welding. Generally this involves an "upsetting" operation, followed by a trimming operation.

During all these stages of the process, the welding device carries out a translatory movement in the direction of the arrow 11. In particular, the bars 3', 3", the jaws 5, 6 in clamping position on the bars and the electrical power supply units 7', 7", 8', 8" solidarily advance along the direction in which the bars are fed forward from the bar seizing stage until the completion of the welding stage.

On completion of the trimming operation, the jaws are opened and withdrawn from the new bar. The new bar is thus free and advances in the direction of the arrow 4', while the jaws 5, 6 and the electrical power supply units return together in the direction opposite to that of the arrow 4' to occupy a position in correspondence with the area where the next bar will be welded, i.e. they return to their initial working position.

For the advantageous configuration of the welding device of the invention, shown in Figures 2 and 3, there is provided that the structure supporting the jaws undergoes a tilting movement between the first stage when the trolley carrying the jaws accelerates and the second stage when the jaws close, in order to bring the latter into the welding position.

After the welding and trimming have been completed, the opening of the jaws coincides with the tilting of the supporting structure back into the position with the jaws at rest.

The area of the shoes is advantageously cooled by means of jets of water, but only during the welding or "flashing" stage. Unlike the known state of the art processes, in which the shoes are cooled continuously throughout the process, from the outlet of the casting line to the inlet to the rolling mill, this feature enables the shoe to be kept at a higher temperature, without reducing its working life, so the heat exchange between the bar and the shoe is more limited. Together with the new configuration of the jaws and shoes, this enables a reduction in the extent of the black spots and in their negative effects.

## Claims

1. A welding device for the end-to-end welding of elongated members (3', 3") with a quadrangular cross-section, such as bars, billets or blooms, produced by a continuous casting process as they move forward along production line, capable of accompanying the elongated members (3', 3"), coming directly from a continuous casting plant or from a preheating oven, during welding along a stretch of a roller table upstream from the rolling mill, the welding device comprising:
- first clamping means (6) for clamping a first elongated member (3') defining a forward feed direction and suitable for advancing along said line at a first speed;
- second clamping means (5) for clamping a second elongated member (3") suitable for advancing along said line, in succession with the first element (3");
- each of said first and second clamping means (5, 6) comprises two opposite clamping elements (5', 5", 6', 6")
- electrical power supply means (7', 7", 8', 8") for supplying an electrical current to the first and second elongated members (3", 3') to weld them end to end, **characterised in that** the second clamping means (5) are suitable for advancing at a second speed, that is greater than said first speed, **in that** there are provided cooling means for cooling first and second clamping means (5, 6), **in that** each of said clamping elements (5', 5", 6', 6") together form a cavity with a shape corresponding to the quadrangular cross-section of the elongated members when they are clamped, and complete with clamp shoes (30, 31),
**in that** the clamping elements (5', 5", 6', 6") define surface areas of contact between the shoe and the elongated member that have a longitudinal extension B not greater than 0.67L, where L is the length of one side of the quadrangular cross-section of the elongated members, and the length of the stretches (43, 44) of the side of said quadrangular cross-section not coming into contact with the shoe amounts to A ≤ 0.33L and C = L - B - A, respectively.

2. A device according to claim 1, wherein said clamp shoes (30, 31) are contained in recesses in line with the pointed ends of said opposite clamping elements (5', 5", 6', 6").

3. A device according to claim 2, wherein the distance (G) between the clamping elements (5', 5", 6', 6") and the surface areas of contact between the shoe and the elongated member is 0.05L or more when the clamps are closed.

4. A device according to claim 2, wherein the length of the stretches (43, 44) of the side of the quadrangular cross-section of the elongated members not coming into contact with the shoes is the same, and amounts to A = C = (L-B)/2.

5. A device according to claim 4, wherein the distance (G) between the clamping elements (5', 5", 6', 6") and the surface area of contact between the shoe and the elongated member is 0.12L or more when the clamp is closed.

6. A device according to claim 3 or 5, wherein the shoes have a substantially parallelepiped shape and the length D of one side (41) of the shoe's profile, defining the height of the shoe in relation to said surface area of contact, is no more than 0.35L.

7. A device according to claim 6, wherein the shoes have a bevelled edge (42) in the vicinity of the surface area of contact between the shoe and the elongated member, the height S of which is no more than 0.07L.

8. A device according to any of the previous claims, comprising a system for carrying the elongated member comprising a roller table (2, 2') and a self-propelled trolley carrying said clamping and electrical power supply means, suitable for accompanying the second elongated member (3') to weld over a stretch of said roller table.

9. A device according to any of the previous claims, comprising a structure for supporting the clamping means (5, 6) designed to be tilted to support said means in the welding position.

10. A welding process for the end-to-end welding of elongated members with a quadrangular cross-section, such as bars, billets or blooms produced by a continuous casting process, by means of a welding device according to claims from 1 to 9, comprising the following stages:
a) a first elongated member (3') advances towards a rolling mill at a first speed in a predetermined forward feed direction,
b) a second elongated member (3") advances in said forward feed direction at a second speed, that is greater than that of the first member (3'),
c) the facing respective ends (9, 10) of said elongated members (3", 3') are juxtaposed and said elongated members (3", 3') are locked in place by means of respective clamping means (5, 6) complete with clamp shoes (30, 31), arranged in a first working position, thereby forming an integral unit, that accompanies the elongated members (3', 3") during welding along a stretch of a roller table,
d) said elongated members (3', 3") are welded end-to-end to form a single elongated member by the application of electrical power supply means (7', 7", 8', 8") to the lateral surfaces of said two elongated members (3', 3"),
e) said electrical power supply means (7', 7", 8', 8") are detached from said now single elongated member,
f) said clamping means (5, 6) are withdrawn from said now single elongated member into a second working position,
wherein, throughout the duration of stage (d) the area of the clamp shoes (30, 31) in contact with said elongated members undergoes a forced cooling action.

11. A process according to claim 10, wherein said cooling action is obtained by means of jets of water.

12. A process according to claim 11, wherein said elongated members (3', 3"), said clamping means (5, 6) in the closed position and said electrical power supply means (7', 7", 8', 8") move forward together in said forward feed direction during stages from (c) to (e).

13. A process according to claim 12, comprising a stage for the upsetting and trimming of the welding area after stage (e).

14. A process according to claim 13, wherein said clamping means (5, 6) and said electrical power supply means (7', 7", 8', 8") return from said second working position to said first working position when they are withdrawn from said single elongated member.

## Patentansprüche

1. Schweißvorrichtung für das stirnseitige Verschweißen von länglichen Elementen (3', 3") mit einem viereckigen Querschnitt, wie Stäben, Barren oder Blöcken, die durch ein Stranggussverfahren erzeugt werden, wenn sie sich entlang einer Produktionsstraße vorwärts bewegen, die in der Lage ist, die länglichen Elemente (3', 3"), die direkt von einer Stranggussanlage oder von einem Vorheizofen, kommen, während des Schweißens entlang einer Strecke eines Rollentisches stromaufwärts von dem Walzgerüst zu begleiten, wobei die Schweißvorrichtung umfasst:
- erste Klemmmittel (6) zum Klemmen eines ersten länglichen Elementes (3'), das eine Vorschubrichtung definiert und geeignet ist, entlang der Straße mit einer ersten Geschwindigkeit vorzurücken;
- zweite Klemmmittel (5) zum Klemmen eines zweiten länglichen Elements (3"), das zum Vorrücken entlang der Straße dem ersten Element (3") folgend geeignet ist;
- wobei ein jedes der ersten und zweiten Klemmmittel (5, 6) zwei gegenüberliegende Klemmteile (5', 5", 6', 6") umfasst,
- elektrische Stromversorgungsmittel (7', 7", 8', 8") zum Zuführen eines elektrischen Stromes zu dem ersten und zweiten länglichen Element (3", 3'), um sie stirnseitig zu verschweißen,
**dadurch gekennzeichnet, dass** die zweiten Klemmmittel (5) zum Vorrücken mit einer zweiten Geschwindigkeit geeignet sind, die größer als die erste Geschwindigkeit ist, dass Kühlmittel zum Kühlen der ersten und zweiten Klemmmittel (5, 6) vorgesehen sind, dass jegliche der Klemmteile (5', 5", 6', 6") zusammen einen Hohlraum mit einer Form bilden, die dem viereckigen Querschnitt der länglichen Elemente entspricht, wenn sie geklemmt sind, und mit Klemmschuhen (30, 31) vervollständigt sind,
dass die Klemmteile (5', 5", 6', 6") Kontaktoberflächen zwischen dem Schuh und dem länglichen Element definieren, die eine Längsausdehnung B nicht größer als 0,67L aufweisen, wobei L die Länge einer Seite des viereckigen Querschnitts der länglichen Elemente ist, und die Länge der Strecken (43, 44) der Seite des viereckigen Querschnitts, die nicht mit dem Schuh in Kontakt gelangt, sich auf A ≤ 0,33L bzw. C = L - B - A beläuft.

2. Vorrichtung nach Anspruch 1, wobei die Klemmschuhe (30, 31) in Ausnehmungen in einer Linie mit den zulaufenden Enden der entgegengesetzten Klemmteile (5', 5", 6', 6") enthalten sind.

3. Vorrichtung nach Anspruch 2, wobei der Abstand (G) zwischen den Klemmteilen (5', 5", 6', 6") und den Kontaktoberflächen zwischen dem Schuh und dem länglichen Element 0,05L oder mehr beträgt, wenn die Klemmen geschlossen sind.

4. Vorrichtung nach Anspruch 2, wobei die Länge der Strecken (43, 44) der Seite des viereckigen Querschnitts der länglichen Elemente, die nicht mit den Schuhen in Kontakt gelangen, gleich ist und sich auf A = C = (L-B)/2 beläuft.

5. Vorrichtung nach Anspruch 4, wobei der Abstand (G) zwischen den Klemmteilen (5', 5", 6', 6") und der Kontaktoberfläche zwischen dem Schuh und dem länglichen Element 0,12L oder mehr beträgt, wenn die Klemme geschlossen ist.

6. Vorrichtung nach Anspruch 3 oder 5, wobei die Schuhe eine Form im Wesentlichen eines Parallelepipeds aufweisen und die Länge D einer Seite (41) des Schuhprofils, die die Höhe des Schuhs definiert, in Relation zu der Kontaktoberfläche nicht größer als 0,35L ist.

7. Vorrichtung nach Anspruch 6, wobei die Schuhe eine gerundete Kante (42) in der Nähe der Kontaktoberfläche zwischen dem Schuh und dem länglichen Element aufweisen, deren Höhe S nicht größer als 0,07L ist.

8. Vorrichtung nach einem der vorhergehenden Ansprüche, die ein System zum Transportieren des länglichen Elements umfasst, das einen Rollentisch (2, 2') und einen Wagen mit Eigenantrieb, der die Klemm- und elektrischen Stromversorgungsmittel transportiert, umfasst, welches geeignet ist, das zweite längliche Element (3') zum Verschweißen über eine Strecke des Rollentisches zu begleiten.

9. Vorrichtung nach einem der vorhergehenden Ansprüche, die eine Struktur zum Abstützen der Klemmmittel (5, 6) umfasst, die konstruiert ist, um geneigt zu werden und somit die Mittel in der Schweißstellung abzustützen.

10. Schweißverfahren für das stirnseitige Verschweißen von länglichen Elementen mit einem viereckigen Querschnitt, wie Stäben, Barren oder Blöcken, die durch ein Stranggussverfahren erzeugt werden, mittels einer Schweißvorrichtung nach Ansprüchen von 1 bis 9, umfassend die folgenden Stufen:
a) ein erstes längliches Element (3') rückt in Richtung eines Walzgerüstes mit einer ersten Geschwindigkeit in einer vorbestimmten Vorschubrichtung vor,
b) ein zweites längliches Element (3") rückt in der Vorschubrichtung mit einer zweiten Geschwindigkeit vor, die größer als die des ersten Elements (3') ist,
c) die zugewandten jeweiligen Enden (9, 10) der länglichen Elemente (3", 3') liegen nebeneinander und die länglichen Elemente (3", 3') werden mittels jeweiliger Klemmmittel (5, 6), die mit Klemmschuhen (30, 31) vervollständigt sind, welche in einer ersten Arbeitsstellung angeordnet sind, an der Stelle verriegelt, wodurch eine integrale Einheit gebildet wird, die die länglichen Elemente (3', 3") während des Schweißens entlang einer Strecke des Rollentisches begleitet,
d) die länglichen Elemente (3', 3") werden durch das Anlegen von elektrischen Stromversorgungsmitteln (7', 7", 8', 8") an die Seitenflächen der zwei länglichen Elemente (3', 3") stirnseitig verschweißt, um ein einziges längliches Element zu bilden,
e) die elektrischen Stromversorgungsmittel (7', 7", 8', 8") werden von dem nun einzigen länglichen Element abgenommen,
f) die Klemmmittel (5, 6) werden von dem nun einzigen länglichen Element in eine zweite Arbeitsstellung zurückgezogen,
wobei während der gesamten Dauer der Stufe (d) die Fläche der Klemmschuhe (30, 31) in Kontakt mit den länglichen Elementen eine Zwangskühlwirkung erfährt.

11. Verfahren nach Anspruch 10, wobei die Kühlwirkung mittels Wasserstrahlen erhalten wird.

12. Verfahren nach Anspruch 11, wobei die länglichen Elemente (3', 3"), die Klemmmittel (5, 6) in der geschlossenen Stellung und die elektrischen Stromversorgungsmittel (7', 7", 8', 8") während der Stadien von (c) bis (e) sich gemeinsam in der Vorschubrichtung vorwärts bewegen.

13. Verfahren nach Anspruch 12, das eine Stufe für das Stauchen und Zuschneiden der Schweißfläche nach Stufe (e) umfasst.

14. Verfahren nach Anspruch 13, wobei die Klemmmittel (5, 6) und die elektrischen Stromversorgungsmittel (7', 7", 8', 8") von der zweiten Arbeitsstellung in die erste Arbeitsstellung zurückkehren, wenn sie von dem einzigen länglichen Element zurückgezogen werden.

## Revendications

1. Dispositif de soudage pour un soudage bout-à-bout d'éléments oblongs (3', 3") d'une section transversale quadrangulaire, comme des barres, blooms ou billettes, produits par un processus de coulée continu lorsqu'ils sont amenés à avancer le long de la chaîne de production, apte à accompagner les éléments oblongs (3, 3") venant directement d'une filière fonte continue ou d'un four de préchauffage, durant le soudage le long d'une étendue d'un train de rouleaux en amont du laminoir, le dispositif de soudage comprenant :
- des premiers moyens de serrage (6) pour serrer un premier élément oblong (3') définissant une direction d'amenée vers l'avant et apte à avancer le long dudit laminoir à une première vitesse ;
- des deuxièmes moyens de serrage (5) pour serrer un deuxième élément oblong (3") apte à avancer le long dudit laminoir, en succession avec le premier élément (3") ;
chacun desdits premier et deuxième moyens de serrage (5, 6) comprend deux éléments de serrage opposés (5', 5", 6', 6") ;
- un moyen d'alimentation électrique (7', 7", 8', 8") pour fournir un courant électrique aux premier et deuxième éléments oblongs (3", 3') pour les souder bout-à-bout, **caractérisé en ce que** les deuxièmes moyens de serrage (5) sont aptes à avancer à une deuxième vitesse qui est plus grande que ladite première vitesse, **en ce que** sont prévus des moyens de refroidissement pour refroidir les premiers et deuxièmes moyens de serrage (5, 6), **en ce que** chacun desdits éléments de serrage (5', 5", 6', 6") ensemble forment une cavité d'une forme correspondant à la section transversale quadrangulaire des éléments oblongs lorsqu'ils sont serrés, et sont complétés avec des patins de serrage (30, 31),
**en ce que** les éléments de serrage (5', 5", 6', 6") définissent des aires de surface de contact entre le patin et l'élément oblong qui ont une extension longitudinale B non supérieure à 0,67L, où L est la longueur d'un côté de la section transversale quadrangulaire des éléments oblongs, et la longueur des extensions (43, 44) du côté de ladite section transversale quadrangulaire ne venant pas en contact avec le patin est de A ≤ 0,33L et C = L - B - A, respectivement.

2. Dispositif selon la revendication 1, dans lequel lesdits patins de serrage (30, 31) se trouvent dans des évidements en ligne avec les extrémités pointues desdits éléments de serrage opposés (5', 5", 6', 6").

3. Dispositif selon la revendication 2, dans lequel la distance (G) entre les éléments de serrage (5', 5", 6', 6") et les aires de surface de contact entre le patin et l'élément oblong est de 0,05L ou plus lorsque les éléments de serrage sont fermés.

4. Dispositif selon la revendication 2, dans lequel la longueur des extensions (43, 44) du côté de la section transversale quadrangulaire des éléments oblongs ne venant pas en contact avec les patins est la même, et est de A = C =(L-B)/2.

5. Dispositif selon la revendication 4, dans lequel la distance (G) entre les éléments de serrage (5', 5", 6', 6") et l'aire de surface de contact entre le patin et l'élément oblong est de 0,12L ou plus lorsque l'élément de serrage est fermé.

6. Dispositif selon la revendication 3 ou 5, dans lequel les patins ont une forme sensiblement en parallélépipède et la longueur D d'un côté (41) du profil de patin, définissant la hauteur du patin relativement à ladite aire de surface de contact, n'est pas supérieure à 0,35L.

7. Dispositif selon la revendication 6, dans lequel les patins ont un bord biseauté (42) au voisinage de l'aire de surface de contact entre le patin et l'élément oblong, dont la hauteur S n'est pas supérieure à 0,07L.

8. Dispositif selon l'une quelconque des revendications précédentes, comprenant un système pour supporter l'élément oblong comprenant un train de rouleaux (2, 2') et un trolley autopropulsé supportant lesdits moyens de serrage et d'alimentation électrique, apte à accompagner le deuxième élément oblong (3') pour souder sur une étendue dudit train de rouleaux.

9. Dispositif selon l'une quelconque des revendications précédentes, comprenant une structure pour supporter les moyens de serrage (5, 6) conçue pour être basculée pour supporter lesdits moyens en position de soudage.

10. Procédé de soudage pour le soudage bout-à-bout d'éléments oblongs d'éléments oblongs (3', 3") d'une section transversale quadrangulaire, comme des barres, blooms ou billettes, produits par un processus de coulée continu, au moyen d'un dispositif de soudage selon les revendications 1 à 9, comprenant les étapes suivantes :
a) un premier élément oblong (3') avance vers un laminoir à une première vitesse dans une direction d'amenée vers l'avant prédéterminée,
b) un deuxième élément oblong (3") avance dans ladite direction d'amenée vers l'avant à une deuxième vitesse qui est plus grande que celle du premier élément (3'),
c) les extrémités respectives se faisant face (9, 10) desdits éléments oblongs (3", 3') sont juxtaposées et lesdits éléments oblongs (3", 3') sont verrouillés en place par des moyens de serrage respectifs (5, 6) complétés par des patins de serrage (30, 31), agencés dans une première position de travail, en formant ainsi une unité intégrale qui accompagne les éléments oblongs (3', 3") durant le soudage le long d'une extension d'un train de rouleaux,
d) lesdits éléments oblongs (3', 3") sont soudés bout à bout pour former un élément oblong unique par l'application du moyen d'alimentation électrique (7', 7", 8', 8") aux surfaces latérales desdits deux éléments oblongs (3', 3"),
e) lesdits moyens d'alimentation électrique (7', 7", 8', 8") sont détachés dudit élément oblong maintenant unique,
f) lesdits moyens de serrage (5, 6) sont retirés dudit élément oblong maintenant unique dans une deuxième position de travail,
où, pendant la durée de l'étape (d), l'aire des patins de serrage (30, 31) en contact avec lesdits éléments oblongs est soumise à une action de refroidissement forcée.

11. Procédé selon la revendication 10, dans lequel ladite action de refroidissement est obtenue au moyen de jets d'eau.

12. Procédé selon la revendication 11, dans lequel lesdits éléments oblongs (3', 3"), lesdits moyens de serrage (5, 6) dans la position fermée et lesdits moyens d'alimentation électriques (7', 7", 8', 8") avancent ensemble dans ladite direction d'amenée vers l'avant durant les étapes de (c) à (e).

13. Procédé selon la revendication 12, comprenant une étape consistant à refouler et à ébarber la zone de soudage après l'étape (e).

14. Procédé selon la revendication 13, dans lequel lesdits moyens de serrage (5, 6) et lesdits moyens d'alimentation électriques (7', 7", 8', 8") retournent de ladite deuxième position de travail à ladite première position de travail lorsqu'ils sont retirés dudit élément oblong unique.
